# EUROPEAN PATENT SPECIFICATION

(11) **EP 3 399 295 B1**
(45) Date of publication and mention of the grant of the patent: **22.09.2021**
(21) Application number: 16882074.4
(22) Date of filing: 28.12.2016
(51) Int. Cl.: G01L 19/00, G01L 19/06, G01L 19/14, G01L 9/00

(54) **PRESSURE SENSOR AND MANUFACTURING METHOD THEREFOR**
DRUCKSENSOR UND HERSTELLUNGSVERFAHREN DAFÜR
CAPTEUR DE PRESSION ET SON PROCÉDÉ DE FABRICATION

(30) Priority: 29.12.2015 KR 20150188662
(43) Date of publication of application: 07.11.2018
(73) Proprietor: Tyco Electronics AMP Korea Co., Ltd., Gyeongsan-si, Gyeongsangbuk-do 38459 (KR)
(72) Inventor: KIM, Young Deok, Gyeongsan-si, Gyeongsangbuk-do 38459 (KR)
(74) Representative: Johnstone, Douglas Ian
(86) International application number: PCT/KR2016/015353
(87) International publication number: WO 2017/116122

(56) References cited:
- WO-A1-2011/041481
- CN-U- 203 616 040
- DE-A1- 10 302 281
- KR-A- 20130 042 300
- KR-A- 20130 042 300
- KR-A- 20150 129 913
- US-A- 4 670 730
- US-A1- 2005 097 721
- US-A1- 2005 166 681
- US-B1- 6 457 368

## Description

### Technical Field

Embodiments relate to a pressure sensor and a manufacturing method therefor.

### Background Art

A sensor refers to a part, device or instrument that senses or detects and measures a physical quantity of heat, light, temperature, pressure or sound or a change therein and sends the corresponding information as a predetermined signal, or a device or part that senses five senses of humans, such as sight and hearing. A pressure sensor may sense a pressure. A prior art pressure sensor (on which the preamble of claim 1 is based) is disclosed in utility model CN 203616040 U. The sensor includes a soft metal body in which a harder metal seat is press-fitted such that a portion of the soft metal body yields and enters a groove in an exterior of the metal seat. A passage in the metal body communicates with a passage in the metal seat which is closed by a diaphragm portion of the metal seat on which a sensing head is positioned. A similar pressure sensor is disclosed in patent DE 10302281 A1. In patent US 2005/0097721 A1 a prior art pressure sensor pressure port of stainless steel which is press-fitted into an aluminum baseplate is disclosed. In its finally installed position a flat shoulder of the pressure port abuts the baseplate to indicate that the pressure port has been fully seated. A further pressure sensor, with multiple components positioned between a sensor housing and a sensing element thereof is disclosed in patent US 6457368 B1. A further pressure sensor is disclosed in patent KR 10-2013-0042300 A. The sensor includes a hollow stepped circular body with an upstanding part closed by an integrally formed diaphragm on which an insulting layer, a sensing circuit and a carbon pattern are formed.

### Disclosure of Invention

### Technical Goals

An aspect provides a pressure sensor that may be simply manufactured and a manufacturing method therefor.

### Technical solutions

According to the invention there is provided a pressure sensor according to claim 1.

The port may be formed of a material having a higher yield stress than a material of the sensor housing.

The port may include an insert to be inserted into the housing pathway, a press-in part positioned behind the insert based on a direction in which the port is inserted into the housing pathway, the press-in part having a diameter greater than a diameter of the housing pathway, and a fixing groove recessed between the insert and the press-in part, the fixing groove having a minimum diameter less than the diameter of the housing pathway, the fixing groove configured to prevent a separation of the port from the housing pathway by receiving a metal flow formed at an inner end portion of the housing pathway while the press-in part is being pressed in the housing pathway.

The sensor header includes a flange positioned between the port and the diaphragm, the flange having a diameter greater than a diameter of the port and a diameter of the diaphragm.

A cross-sectional area of the flange may be greater than a maximum cross-sectional area of the port based on a plane perpendicular to a longitudinal direction of the housing pathway.

The sensor housing includes a receiver having a diameter greater than the diameter of the housing pathway, the receiver receiving the flange.

The diameter of the receiver may be greater than the diameter of the flange.

The flange is disposed to be spaced apart from a bottom surface of the receiver when the sensor header is completely fastened to the sensor housing.

The sensor header may further include a connecting neck disposed between the flange and the diaphragm, the connecting neck having a diameter less than a maximum diameter of the diaphragm and a maximum diameter of the port.

The pressure sensor may further include a circuit board including a sensor hole formed to have a diameter greater than a diameter of the diaphragm. The diaphragm may be positioned at a center of the sensor hole, and a strain gauge attached to the diaphragm and the circuit board may be electrically connected to each other by wire bonding.

The pressure sensor may further include a connector configured to transmit a signal received from the circuit board to an external device, and the connector may include a connector housing to be connected to the sensor housing, and a connection terminal to be positioned in the connector housing and electrically connected to the circuit board.

The pressure sensor may further include a connecting terminal having an elasticity in a direction perpendicular to the circuit board, the connecting terminal configured to connect the circuit board and the connection terminal.

According to the invention there is also provided a method, as set out in the independent method claim 9, of manufacturing a pressure sensor.

The pressing may be performed using an exclusive jig configured to pressurize the flange without pressurizing a diaphragm of the sensor header.

The exclusive jig may include a pressurizing plate, and a pressurizing protrusion protruding from the pressurizing plate and having a protruding length greater than a distance from a top surface of the flange to a top surface of the diaphragm.

A distance from a center of the pressurizing plate to an inner wall of the pressurizing protrusion may be greater than a distance from a center of the diaphragm to an edge of the diaphragm.

The method may further include assembling a circuit board with the sensor housing after the pressing, the circuit board configured to transmit, to an external device, a signal measured from a stain gauge disposed on a diaphragm of the sensor header, and wire-bonding the circuit board and the strain gauge after the assembling. The circuit board may include a sensor hole formed to have a diameter greater than a diameter of the diaphragm.

The method may further include assembling a connector with the sensor housing after the wire-bonding, the connector including a connection terminal to be electrically connected to the circuit board, and installing a connecting terminal on the circuit board before the assembling of the circuit board with the sensor housing, the connecting terminal configured to electrically connect the connection terminal and the circuit board. The connecting terminal may have an elasticity in a direction perpendicular to the circuit board.

### Effects

According to an embodiment, a pressure sensor may be manufactured by pressing a sensor header in a sensor housing. When compared to a pressure sensor including an O-ring inserted between a sensor housing and a sensor header, the total number of parts constituting the pressure sensor may be reduced, a manufacturing cost and time may be reduced, and a durability of the pressure sensor including a sealing capability may improve. Further, corrosion of the O-ring by a fluid flowing into the pressure sensor may be prevented. In addition, an effect of a change in mechanical stress on an output of the pressure sensor, the mechanical stress applied to the pressure sensor caused by a change in compressive force in response to aging of the O-ring, may be prevented.

According to an embodiment, due to a structural feature of a sensor header, a pressure sensor may prevent an effect of a mechanical stress generated during a press-in process of the sensor header or a miscellaneous load on a diaphragm of the sensor header, whereby an accuracy of the pressure sensor may improve.

According to an embodiment, a flange of a sensor header of a pressure sensor may be spaced apart from an inner wall of a sensor housing, thereby preventing an error of the pressure sensor caused by a volume change occurring in response to a change in temperature of the pressure sensor.

### Brief Description of Drawings

FIG. 1 is a view illustrating a pressure sensor according to an embodiment.
FIG. 2 is an exploded view illustrating a pressure sensor according to an embodiment.
FIG. 3 is a view illustrating a sensor header according to an embodiment.
FIG. 4 illustrates a cross-sectional view and a partially-enlarged view of a pressure sensor according to an embodiment.
FIG. 5 illustrates a process of pressing a sensor header in a sensor housing using an exclusive jig according to an embodiment.
FIG. 6 is a flowchart illustrating a method of manufacturing a pressure sensor according to an embodiment.

### Best Mode for Carrying Out the Invention

Hereinafter, some embodiments will be described in detail with reference to the accompanying drawings. Regarding the reference numerals assigned to the elements in the drawings, it should be noted that the same elements will be designated by the same reference numerals, wherever possible, even though they are shown in different drawings. Also, in the description of embodiments, detailed description of well-known related structures or functions will be omitted when it is deemed that such description will cause ambiguous interpretation of the present disclosure.

In addition, terms such as first, second, A, B, (a), (b), and the like may be used herein to describe components. Each of these terminologies is not used to define an essence, order or sequence of a corresponding component but used merely to distinguish the corresponding component from other component(s).

It should be noted that if it is described in the specification that one component is "connected", "coupled", or "joined" to another component, a third component may be "connected", "coupled", and "joined" between the first and second components, although the first component may be directly connected, coupled or joined to the second component.

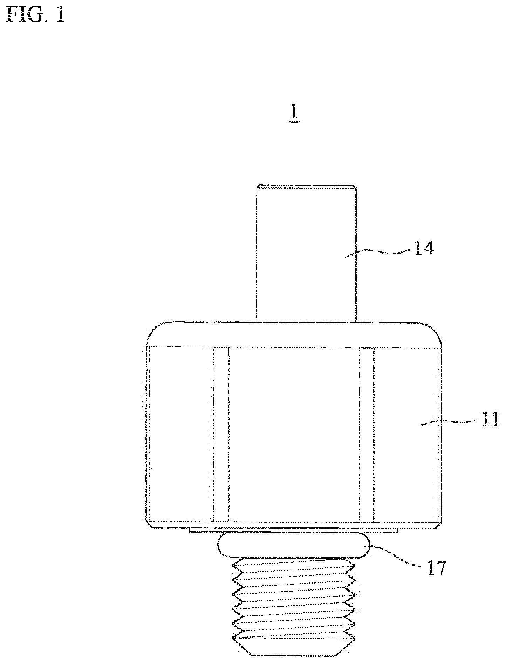

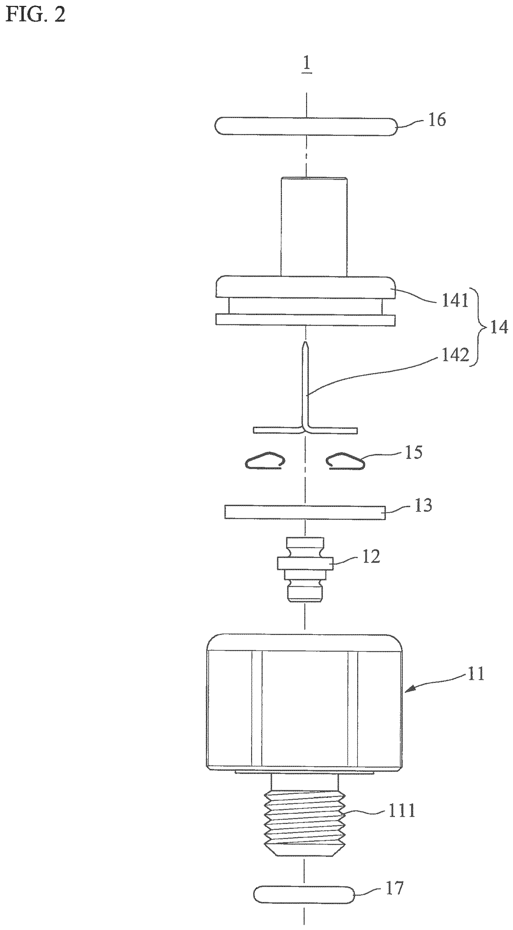

FIG. 1 is a view illustrating a pressure sensor according to an embodiment, and FIG. 2 is an exploded view illustrating the pressure sensor according to an embodiment.

Referring to FIGS. 1 and 2, a pressure sensor 1 may be fastened to a pressure measurement target to measure a pressure of a fluid flowing from the pressure measurement target and transmit the measured pressure to an external device. The pressure sensor 1 may include a sensor housing 11, a sensor header 12, a circuit board 13, a connector 14, a connecting terminal 15, an inner O-ring 16, and an outer O-ring 17. For example, the sensor housing 11 and the sensor header 12 may be coupled to each other in a press-in manner while being machined to be cut separately.

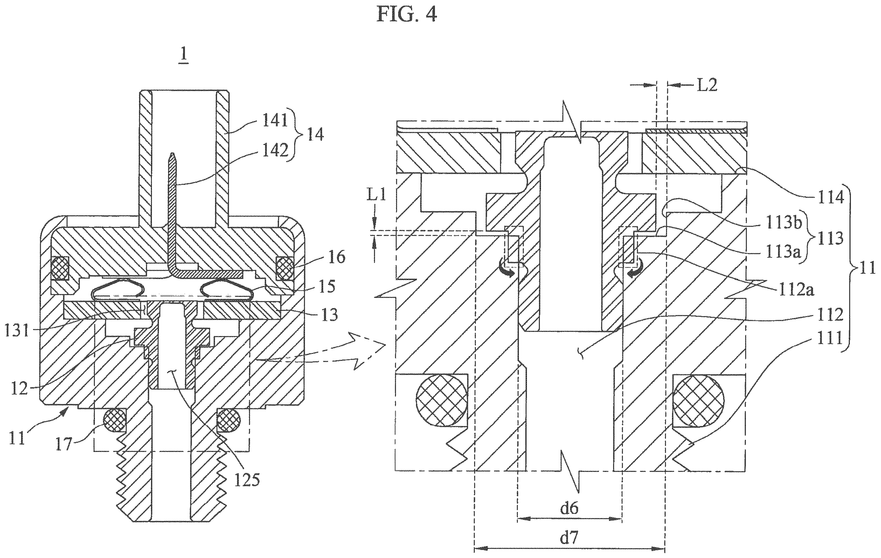

The sensor housing 11 may include a fastener 111 to be fastened to the pressure measurement target, and a housing pathway 112 (see FIG. 4) penetrating the fastener 111 to guide the fluid flowing from the pressure measurement target.

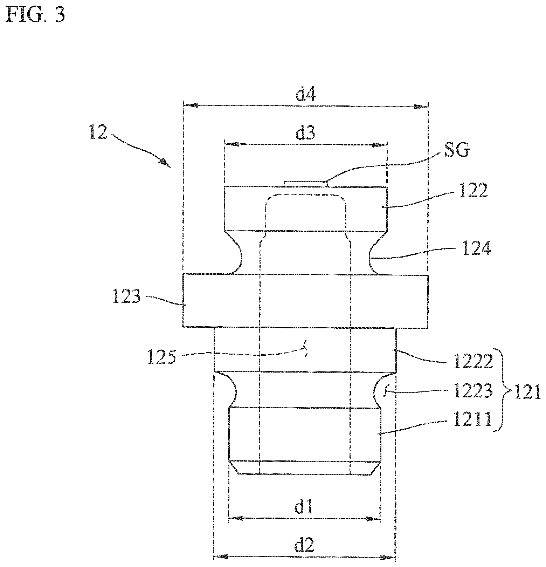

The sensor header 12 is pressed in and fixed to the housing pathway 112. The sensor header 12 may be formed of a material having a higher yield stress than a material of the sensor housing 11. A configuration and an assembling process of the sensor header 12 will be described later with reference to FIGS. 3 and 4.

The circuit board 13 may transmit the measured signal from the sensor header 12 to the external device through the connector 14.

The connector 14 may transmit the signal received from the circuit board 13 to the external device. The connector 14 may include a connector housing 141 to be connected to the sensor housing 11, and a connection terminal 142 to be positioned in the connector housing 141 and electrically connected to the circuit board 13.

The connecting terminal 15 may be disposed between the circuit board 13 and the connection terminal 142 to electrically connect the circuit board 13 and the connection terminal 142. The connecting terminal 15 may have an elasticity in a direction perpendicular to the circuit board 13. As shown in FIG. 2, the connecting terminal 15 may have a shape of C-clip. By the above structure, even in a case in which there exist a manufacturing tolerance and an assembling tolerance of the circuit board 13 and/or the connection terminal 142, an electrical contact state of the circuit board 13 and the connection terminal 142 may be stably secured.

The inner O-ring 16 may be disposed between the connector housing 141 and the sensor housing 11 to maintain an airtightness between the connector housing 141 and the sensor housing 11, thereby preventing an inflow of a foreign substance. For example, the inner O-ring 16 may be disposed along an outer edge of the connector housing 141 and an inner edge of a portal of the sensor housing 11.

The outer O-ring 17 may be disposed, for example, in a circumferential direction of the fastener 111 of the connector housing 141.

The outer O-ring 17 may maintain an airtightness between the pressure measurement target and the sensor housing 11, thereby preventing an inflow of a foreign substance.

FIG. 3 is a view illustrating a sensor header according to an embodiment, and F1G. 4 illustrates a cross-sectional view and a partially-enlarged view of a pressure sensor according to an embodiment.

Referring to FIGS. 3 and 4, the sensor header 12 is pressed in and fixed to the sensor housing 11. The sensor header 12 and the sensor housing 11 may be formed of materials having different yield stresses, for example, metals having different yield stresses. For example, the sensor housing 11 may be formed of an aluminum alloy, and the sensor header 12 may be formed of stainless steel having a higher yield stress than the aluminum alloy. By the above design, one of the sensor header 12 and the sensor housing 11, the one formed of a material having a lower yield stress, may be deformed such that a metal flow may be formed, during a process of pressing the sensor header 12 in the sensor housing 11 by applying a sufficient load thereto. The formed metal flow may be inserted into an empty space of the other one formed of a material having a higher yield stress, whereby the sensor header 12 and the sensor housing 11 may be coupled and in close contact in shapes to be airtight, without using a separate fastening element. That is, the sensor header 12 may be coupled to and sealed with the sensor housing 11, without using a separate airtight device such as an O-ring. By the above manner, a volume may change slightly as the temperature changes. Thus, a change in the airtightness level with respect to the temperature may be reduced. Further, the total number of parts constituting the pressure sensor 1 may be reduced, whereby the production cost may be reduced, and the manufacturing process may be simplified. In addition, an effect of a miscellaneous load generated during an assembling process on a sensor may be reduced. The sensor header 12 may include a port 121, a diaphragm 122, a flange 123, a connecting neck 124, a header pathway 125, and a strain gauge SG.

The header pathway 125 penetrates the port 121. One end of the header pathway 125 may fluidly communicate with the housing pathway 112 to guide the fluid flowing from the housing pathway 112, and the other end thereof is covered by the diaphragm 122.

The diaphragm 122 is positioned at the other end of the header pathway 125. The diaphragm 122 may have a shape of a thin plate to be deformed by the fluid flowing thereinto. The strain gauge SG may be attached to one surface, for example, a top surface, of the diaphragm 122. The strain gauge SG may convert a deformation level of the diaphragm 122 into an electrical signal, and transmit the electrical signal to the circuit board 13. The strain gauge SG may be formed of, for example, a silicon material.

The port 121 is pressed in and fixed to the housing pathway 112. For example, the port 121 may be formed of a material having a higher yield stress than the material of the sensor housing 11. The port 121 may include an insert 1211, a press-in part 1222, and a fixing groove 1223.

The insert 1211 may be inserted into the housing pathway 112. A diameter d1 of the insert 1211 may be less than or equal to a diameter d6 of the housing pathway 112.

The press-in part 1222 may be positioned behind the insert 1211 based on a direction in which the port 121 is inserted into the housing pathway 112, and pressed in the housing pathway 112. A diameter d2 of the press-in part 1222 may be greater than the diameter d1 of the insert 1211, and greater than the diameter d6 of the housing pathway 112. Further, a yield stress of a material of the press-in part 1222 may be higher than a yield stress of a material of an inner end portion of the housing pathway 112. By the above structure, the inner end portion of the housing pathway 112 may be deformed while the press-in part 1222 is being pressed in the housing pathway 112 such that a metal flow may be formed. A portion deformed in a form of the metal flow, among the inner end portion of the housing pathway 112, may be referred to as a deformed portion 112a.

The fixing groove 1223 may be recessed between the insert 1211 and the press-in part 1222. A minimum diameter of the fixing groove 1223 may be less than the diameter d6 of the housing pathway 112. By the above structure, the deformed portion 112a of the housing pathway 112 may be deformed in a form of a metal flow and fill the fixing groove 1223 while the press-in part 1222 is being pressed in the housing pathway 112, thereby preventing a separation of the port 121 from the housing pathway 112.

The flange 123 is positioned between the port 121 and the diaphragm 122, and have a diameter d4 greater than the maximum diameter d2 of the port 121 and a maximum diameter d3 of the diaphragm 122. Based on a place perpendicular to a longitudinal direction of the housing pathway 112 and/or the header pathway 125, a cross-sectional area of the flange 123 excluding the header pathway 125 may be greater than a maximum cross-sectional area of the port 121 excluding the header pathway 125. For example, the cross-sectional area of the flange 123 excluding the header pathway 125 may be at least two times greater than the maximum cross-sectional area of the port 121 excluding the header pathway 125. By the above structure, during a process of transmitting, to the diaphragm 122, a mechanical stress generated in a vicinity of the press-in part 1222 when the press-in part 1222 is completely pressed in the housing pathway 112, the flange 123 having relatively great cross-sectional area and volume may disperse the mechanical stress, thereby reducing an effect of the mechanical stress on an output of the pressure sensor 1.

The connecting neck 124 may be disposed between the flange 123 and the diaphragm 122, and have a diameter less than the diameter d3 of the diaphragm 122 and the maximum diameter d2 of the port 121. Although there exists a portion of the mechanical stress dispersed while passing through the flange 123, the mechanical stress may be extinct while deforming the connecting neck 124 before being transmitted to the diaphragm 122. Hence, a miscellaneous load to be transmitted to the diaphragm 122 may be blocked.

Meanwhile, the sensor housing 11 includes a receiver 113 having a diameter d7 greater than the diameter d6 of the housing pathway 112, the receiver 113 to receive the flange 123, and a seat portion 114 positioned above the receiver 113, the seat portion 114 having a greater diameter than the receiver 113, the seat portion 114 to provide a space in which the circuit board 13 is seated. The receiver 113 may include a bottom surface 113a connected to the housing pathway 112, and an inner circumferential surface 113b to enclose a circumference of the bottom surface 113a.

When the sensor header 12 is completely fastened to the sensor housing 11 as shown in FIG. 4, the flange 123 is a distance L1 spaced apart from the bottom surface 113a of the receiver 113. The distance L1 may be, for example, 0.5 millimeters (mm). By the above structure, although the sensor header 12 and the sensor housing 11 formed of different materials expand by heat with different degrees in response to a change in the peripheral temperature, interference of the flange 123 with the bottom surface 113a of the receiver 113 may be prevented. Hence, by the above structure, transmission of an undesired mechanical stress to the diaphragm 122 due to a volume change caused by the change in the peripheral temperature of the pressure sensor 1 may be prevented, whereby a measuring accuracy of the pressure sensor 1 may improve.

The diameter d7 of the receiver 113 may be a distance L2 greater than the diameter of the flange 123. When the sensor header 12 is completely fastened to the sensor housing 11 as shown in FIG. 4, the flange 123 may be the distance L2 spaced apart from the inner circumferential surface 113b of the receiver 113. The distance L2 may be, for example, 1 mm. By the above structure, although the sensor header 12 and the sensor housing 11 formed of different materials expand by heat with different degrees in response to a change in the peripheral temperature, interference of the flange 123 with the inner circumferential surface 113b of the receiver 113 may be prevented. Hence, by the above structure, transmission of an undesired mechanical stress to the diaphragm 122 due to a volume change caused by the change in the peripheral temperature of the pressure sensor 1 may be prevented, whereby the measuring accuracy of the pressure sensor 1 may improve.

Meanwhile, the circuit board 13 may be seated in the seat portion 114 of the sensor housing 11. The circuit board 13 may include a sensor hole 131 formed to have a diameter greater than the diameter of the diaphragm 122. When the circuit board 13 is seated in the seat portion 114, the diaphragm 122 may be positioned at a center of the sensor hole 131.

By the above structure, the strain gauge SG and the circuit board 13 may be electrically connected easily, while the sensor header 12 and the circuit board 13 are sequentially assembled with the sensor housing 11. For example, the strain gauge SG and the circuit board 13 may be connected to each other by wire bonding.

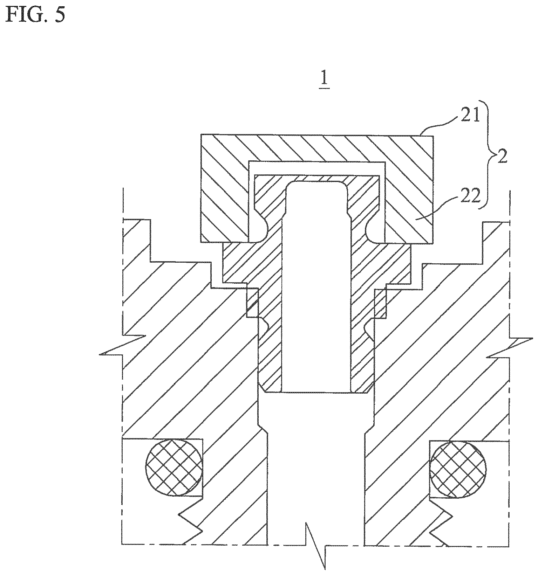

FIG. 5 illustrates a process of pressing a sensor header in a sensor housing using an exclusive jig according to an embodiment.

Referring to FIG. 5, an exclusive jig 2 may pressurize the flange 123 without pressurizing the diaphragm 122 of the sensor header 12. The exclusive jig 2 may include a pressurizing plate 21 and a pressurizing protrusion 22.

The pressurizing plate 21 may be spaced apart from the diaphragm 122 when the exclusive jig 2 is in contact with the flange 123. For example, the pressurizing plate 21 may have a flat top surface such that a pressurizing device to pressurize the exclusive jig 2 may provide a uniform pressure to the exclusive jig 2.

The pressurizing protrusion 22 may protrude from the pressurizing plate 21, and have a protruding length greater than a distance from a top surface of the flange 123 to a top surface of the diaphragm 122 in the example of FIG. 5. The pressurizing protrusion 22 may have a symmetric shape about a center of the pressurizing plate 21, for example, a hollow cylindrical shape. However, the shape of the pressurizing protrusion 22 is not limited to the cylindrical shape. For example, the pressurizing protrusion 22 may have a shape of a plurality of columns disposed along an edge of the pressurizing plate 21.

A distance from the center of the pressurizing plate 21 to an inner wall of the pressurizing protrusion 22 may be greater than a distance from the center of the diaphragm 122 to an edge of the diaphragm 122. By the above shape, interference of the exclusive jig 2 with the diaphragm 122 while the exclusive jig 2 is pressurizing the flange 123 may be prevented, whereby transmission of a mechanical stress to the diaphragm 122 may be prevented.

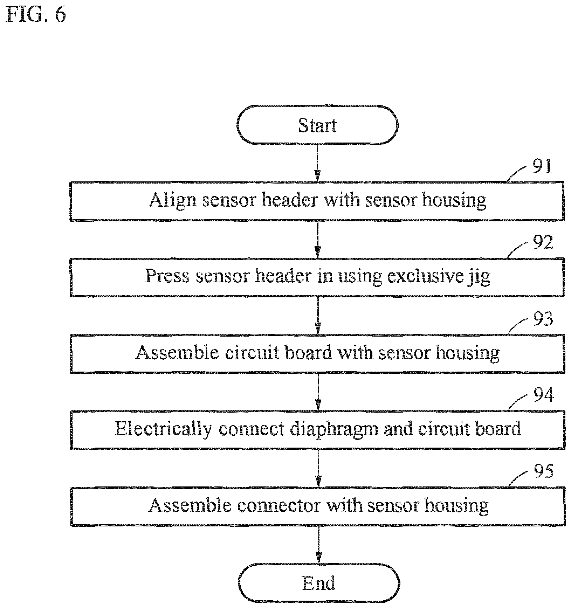

FIG. 6 is a flowchart illustrating a method of manufacturing a pressure sensor according to an embodiment.

Referring to FIGS. 1 through 6, a method of manufacturing the pressure sensor 1 may include operation 91 of aligning the sensor header 12 with the sensor housing 11, operation 92 of pressing the sensor header 12 in using the exclusive jig 2, operation 93 of assembling the circuit board 13 with the sensor housing 11, operation 94 of electrically connecting the diaphragm 122 and the circuit board 13, and operation 95 of assembling the connector 14 with the sensor housing 11.

First, in operation 91, the port 121 of the sensor header 12 may be aligned with the housing pathway 112 of the sensor housing 11. For example, the insert 1211 and the fixing groove 1223 each having the diameter less than or equal to the diameter of the housing pathway 112, among the port 121 of the sensor header 12, may be inserted into the housing pathway 112, and the press-in part 1222 having the diameter greater than the diameter of the housing pathway 112 may be aligned while being stopped by the portal of the housing pathway 112.

Next, in operation 92, the port 121 may be pressed in the housing pathway 112 by pressurizing the flange 123 of the sensor header 12. For example, a worker may pressurize the flange 123 using the exclusive jig 2 as shown in FIG. 5. The worker may pressurize the exclusive jig 2 using a pressurizing device capable of position control and/or load sensing, for example, a servo press. By the above method, the worker may control the flange 123 to be stopped at a position spaced apart from the bottom surface 113a of the receiver 113 based on a predetermined value. Further, the worker may easily perform quality control based on a load pattern during pressurization and a pressurizing depth of the sensor header 12.

Next, in operation 93, the circuit board 13 may be seated in the sensor housing 11, the circuit board 13 to transmit, to an external device, a signal measured from the strain gauge SG disposed on the diaphragm 122 of the sensor header 12. While the circuit board 13 is seated in the sensor housing 11, the circuit board 13 and the strain gauge SG may be connected to each other by wire bonding.

After the wire bonding of the circuit board 13 and the strain gauge SG, the connector 14 including the connection terminal 142 to be electrically connected to the circuit board 13 may be assembled with the sensor housing 11, in operation 94.

Meanwhile, after operation 93 and before operation 94, an operation of installing the connecting terminal 15 on the circuit board 13, the connecting terminal 15 to electrically connect the connection terminal 142 and the circuit board 13, may be performed.

A pressure sensor according to an embodiment is manufactured by pressing a sensor header in a sensor housing.

When compared to a pressure sensor including an O-ring inserted between a sensor housing and a sensor header, the total number of parts constituting the pressure sensor may be reduced, a manufacturing cost and time may be reduced, and a durability of the pressure sensor including a sealing capability may improve. Further, corrosion of the O-ring by a fluid flowing into the pressure sensor may be prevented. In addition, an effect of a change in mechanical stress on an output of the pressure sensor, the mechanical stress applied to the pressure sensor caused by a change in compressive force in response to aging of the O-ring, may be prevented.

Due to a structural feature of the sensor header, the pressure sensor may prevent an effect of the mechanical stress generated during the press-in process of the sensor header or a miscellaneous load on a diaphragm of the sensor header, whereby an accuracy of the pressure sensor may improve. A flange of the sensor header of the pressure sensor may be spaced apart from an inner wall of the sensor housing, thereby preventing an error of the pressure sensor caused by a volume change occurring in response to a change in temperature of the pressure sensor.

## Claims

1. A pressure sensor (1), comprising:
a sensor housing (11) including a fastener (111) to be fastened to a pressure measurement target, and a housing pathway (112) configured to penetrate the fastener (111) and guide a fluid flowing from the pressure measurement target; and
a sensor header (12) including a port (121) pressed in and fixed to the housing pathway (112), a header pathway (125) configured to penetrate the port (121) and guide the fluid flowing from the housing pathway (112), and a diaphragm (122) positioned at an end portion of the header pathway (125),
wherein the sensor header (12) further includes a flange (123) positioned between the port (121) and the diaphragm (122), the flange (123) having a diameter (d4) greater than a diameter of the port (121) and a diameter of the diaphragm (122), and
wherein the sensor housing (11) further includes a receiver recess (113) receiving the flange (123) and having: (i) a diameter (d7) greater than the diameter (d6) of the housing pathway (112); (ii) a bottom surface (113a), an inner edge of which is connected to the housing pathway (112); and (iii) an inner circumferential surface (113b) connected to and enclosing a circumference of the bottom surface (113a),
**characterised in that** the flange (123) is disposed spaced apart from the bottom surface (113a) of the receiver recess (113).

2. The pressure sensor (1) of claim 1, wherein the port (121) is formed of a material having a higher yield stress than a material of the sensor housing (11).

3. The pressure sensor (1) of claim 2, wherein the port (121) includes:
an insert (1211) to be inserted into the housing pathway (112);
a press-in part (1222) positioned behind the insert (1211) based on a direction in which the port (121) is inserted into the housing pathway (112), the press-in part (1222) having a diameter (d2) greater than the diameter (d6) of the housing pathway (112); and
a fixing groove (1223) recessed between the insert (1211) and the press-in part (1222), the fixing groove (1223) having a minimum diameter less than the diameter of the housing pathway (112), the fixing groove (1223) configured to prevent a separation of the port (121) from the housing pathway (112) by receiving a metal flow formed at an inner end portion of the housing pathway (112) while the press-in part (1222) is being pressed in the housing pathway (112).

4. The pressure sensor (1) of claim 1, wherein a cross-sectional area of the flange (123) is greater than a maximum cross-sectional area of the port (121) based on a plane perpendicular to a longitudinal direction of the housing pathway (112).

5. The pressure sensor (1) of claim 1, wherein the sensor header (12) further includes a connecting neck (124) disposed between the flange (123) and the diaphragm (122), the connecting neck (124) having a diameter less than a maximum diameter (d3) of the diaphragm (122) and a maximum diameter (d2) of the port (121).

6. The pressure sensor (1) of claim 1, further comprising:
a circuit board (13) including a sensor hole formed to have a diameter greater than a diameter (d3) of the diaphragm (122),
wherein the diaphragm (122) is positioned at a center of the sensor hole, and
a strain gauge (SG) attached to the diaphragm (122) and the circuit board (13) are electrically connected to each other by wire bonding.

7. The pressure sensor (1) of claim 6, further comprising:
a connector (14) configured to transmit a signal received from the circuit board (13) to an external device,
wherein the connector (14) includes:
a connector housing (141) to be connected to the sensor housing (11); and
a connection terminal (142) to be positioned in the connector housing (141) and electrically connected to the circuit board (13).

8. The pressure sensor (1) of claim 7, further comprising:
a connecting terminal (15) having an elasticity in a direction perpendicular to the circuit board (13), the connecting terminal (15) configured to connect the circuit board (13) and the connection terminal (142).

9. A method of manufacturing a pressure sensor (1) according to claim 1, the method comprising:
aligning the port (121) of the sensor header (12) with the housing pathway (112) of the sensor housing (11) the sensor header (12) further including the flange (123) positioned between the port (121) and the diaphragm (122) of the sensor header (12), the flange having the diameter (d4) greater than the diameter of the port (121) and the diameter of the diaphragm (122), the sensor housing (11) further including the receiver recess (113) having the diameter (d7) greater than the diameter (d6) of the housing pathway (12), the receiver recess (113) configured to receive the flange (123); and
pressing the port (121) in the housing pathway (112) by pressurizing the flange (123) of the sensor header (12),
wherein the port (121) has the greater diameter (d2) than the housing pathway (112), and the flange (123) has the diameter (d4) greater than the diameter (d2) of the port (121),
**characterised in that**, when the sensor header (12) is completely fastened to the sensor housing (11) the flange (123) is disposed spaced apart from a bottom surface (113a) of the receiver recess (113).

10. The method of claim 9, wherein the pressing is performed using an exclusive jig configured to pressurize the flange (123) without pressurizing a diaphragm (122) of the sensor header (12).

11. The method of claim 9, further comprising:
assembling a circuit board (13) with the sensor housing (11) after the pressing, the circuit board (13) configured to transmit, to an external device, a signal measured from a strain gauge (SG) disposed on a diaphragm (122) of the sensor header (12); and
wire-bonding the circuit board (13) and the strain gauge (SG) after the assembling,
wherein the circuit board (13) includes a sensor hole formed to have a diameter greater than a diameter of the diaphragm (122).

12. The method of claim 11, further comprising:
assembling a connector (14) with the sensor housing (11) after the wire-bonding, the connector (14) including a connection terminal (142) to be electrically connected to the circuit board (13); and
installing a connecting terminal (15) on the circuit board (13) before the assembling of the circuit board (13) with the sensor housing (11), the connecting terminal (15) configured to electrically connect the connection terminal (142) and the circuit board (13),
wherein the connecting terminal (15) has an elasticity in a direction perpendicular to the circuit board (13).

## Patentansprüche

1. Drucksensor (1), der Folgendes umfasst:
ein Sensorgehäuse (11) mit einem Befestigungselement (111), das an einem Druckmessziel zu befestigen ist, und einem Gehäuseweg (112), konfiguriert zum Durchdringen des Befestigungselements (111) und zum Führen eines von dem Druckmessziel fließendes Fluids; und
einen Sensorkopf (12) mit einem Anschlussstück (121), das in den Gehäuseweg (112) eingedrückt und daran fixiert ist, einem Kopfweg (125), konfiguriert zum Durchdringen des Anschlussstücks (121) und zum Führen des aus dem Gehäuseweg (112) fließenden Fluids, und einer Membran (122), die an einem Endabschnitt des Kopfwegs (125) angeordnet ist,
wobei der Sensorkopf (12) ferner einen Flansch (123) aufweist, der zwischen dem Anschlussstück (121) und der Membran (122) positioniert ist, wobei der Flansch (123) einen Durchmesser (d4) aufweist, der größer ist als ein Durchmesser des Anschlussstücks (121) und ein Durchmesser der Membran (122), und
wobei das Sensorgehäuse (11) ferner eine Aufnahmeaussparung (113) aufweist, die den Flansch (123) aufnimmt und Folgendes aufweist: (i) einen Durchmesser (d7), der größer ist als der Durchmesser (d6) des Gehäusewegs (112); (ii) eine Bodenfläche (113a), von der ein innerer Rand mit dem Gehäuseweg (112) verbunden ist; und (iii) eine innere Umfangsfläche (113b), die mit der Bodenfläche (113a) verbunden ist und deren Umfang umschließt,
**dadurch gekennzeichnet, dass** der Flansch (123) von der Bodenfläche (113a) der Aufnahmeaussparung (113) beabstandet angeordnet ist.

2. Drucksensor (1) nach Anspruch 1, wobei das Anschlussstück (121) aus einem Material mit einer höheren Fließspannung als ein Material des Sensorgehäuses (11) gebildet ist.

3. Drucksensor (1) nach Anspruch 2, wobei das Anschlussstück (121) Folgendes umfasst:
einen Einsatz (1211) zum Einsetzen in den Gehäuseweg (112);
ein Einpressteil (1222), das hinter dem Einsatz (1211) auf der Basis einer Richtung positioniert ist, in der das Anschlussstück (121) in den Gehäuseweg (112) eingeführt wird, wobei das Einpressteil (1222) einen Durchmesser (d2) aufweist, der größer ist als der Durchmesser (d6) des Gehäusewegs (112); und
eine Fixiernut (1223), die zwischen dem Einsatz (1211) und dem Einpressteil (1222) ausgespart ist, wobei die Fixiernut (1223) einen minimalen Durchmesser aufweist, der kleiner ist als der Durchmesser des Gehäusewegs (112), wobei die Fixiernut (1223) zum Verhindern einer Trennung des Anschlussstücks (121) vom Gehäuseweg (112) konfiguriert ist, indem sie einen an einem inneren Endabschnitt des Gehäusewegs (112) ausgebildeten Metallfluss aufnimmt, während das Einpressteil (1222) in den Gehäuseweg (112) gedrückt wird.

4. Drucksensor (1) nach Anspruch 1, wobei eine Querschnittsfläche des Flanschs (123) größer ist als eine maximale Querschnittsfläche des Anschlussstücks (121) auf der Basis einer Ebene lotrecht zu einer Längsrichtung des Gehäusewegs (112).

5. Drucksensor (1) nach Anspruch 1, wobei der Sensorkopf (12) ferner einen Verbindungshals (124) aufweist, der zwischen dem Flansch (123) und der Membran (122) angeordnet ist, wobei der Verbindungshals (124) einen Durchmesser aufweist, der kleiner ist als ein maximaler Durchmesser (d3) der Membran (122) und ein maximaler Durchmesser (d2) des Anschlussstücks (121).

6. Drucksensor (1) nach Anspruch 1, der ferner Folgendes umfasst:
eine Leiterplatte (13) mit einem Sensorloch, das so ausgebildet ist, dass es einen Durchmesser hat, der größer ist als ein Durchmesser (d3) der Membran (122),
wobei die Membran (122) in der Mitte des Sensorlochs positioniert ist und
ein an der Membran (122) angebrachter Dehnungsmessstreifen (SG) und die Leiterplatte (13) durch Drahtbonding elektrisch miteinander verbunden sind.

7. Drucksensor (1) nach Anspruch 6, der ferner Folgendes umfasst:
einen Verbinder (14), konfiguriert zum Übertragen eines von der Leiterplatte (13) empfangenen Signals an ein externes Gerät,
wobei der Verbinder (14) Folgendes umfasst:
ein Verbindergehäuse (141) zum Verbinden mit dem Sensorgehäuse (11); und
eine Verbindungsklemme (142) zum Positionieren im Verbindergehäuse (141) und zum elektrischen Verbinden mit der Leiterplatte (13).

8. Drucksensor (1) nach Anspruch 7, der ferner Folgendes umfasst:
eine Verbindungsklemme (15) mit einer Elastizität in einer Richtung lotrecht zur Leiterplatte (13), wobei die Verbindungsklemme (15) zum Verbinden der Leiterplatte (13) und der Verbindungsklemme (142) konfiguriert ist.

9. Verfahren zur Herstellung eines Drucksensors (1) nach Anspruch 1, wobei das Verfahren Folgendes beinhaltet:
Ausrichten des Anschlussstücks (121) des Sensorkopfes (12) mit dem Gehäuseweg (112) des Sensorgehäuses (11), wobei der Sensorkopf (12) ferner den Flansch (123) aufweist, der zwischen dem Anschlussstück (121) und der Membran (122) des Sensorkopfes (12) positioniert ist, wobei der Durchmesser (d4) des Flanschs größer ist als der Durchmesser des Anschlussstücks (121) und der Durchmesser der Membran (122), wobei das Sensorgehäuse (11) ferner die Aufnahmeaussparung (113) aufweist, deren Durchmesser (d7) größer ist als der Durchmesser (d6) des Gehäusewegs (12), wobei die Aufnahmeaussparung (113) zum Aufnehmen des Flanschs (123) konfiguriert ist; und
Pressen des Anschlussstücks (121) in den Gehäuseweg (112) durch Druckbeaufschlagen des Flanschs (123) des Sensorkopfs (12),
wobei das Anschlussstück (121) einen größeren Durchmesser (d2) als der Gehäuseweg (112) aufweist und wobei der Durchmesser (d4) des Flanschs (123) größer ist als der Durchmesser (d2) des Anschlussstücks (121),
**dadurch gekennzeichnet, dass**, wenn der Sensorkopf (12) vollständig am Sensorgehäuse (11) befestigt ist, der Flansch (123) von einer Bodenfläche (113a) der Aufnahmeaussparung (113) beabstandet angeordnet ist.

10. Verfahren nach Anspruch 9, wobei das Pressen unter Verwendung einer exklusiven Vorrichtung durchgeführt wird, konfiguriert zum Druckbeaufschlagen des Flanschs (123), ohne eine Membran (122) des Sensorkopfes (12) mit Druck zu beaufschlagen.

11. Verfahren nach Anspruch 9, das ferner Folgendes beinhaltet:
Zusammenfügen einer Leiterplatte (13) mit dem Sensorgehäuse (11) nach dem Pressen, wobei die Leiterplatte (13) zum Übertragen eines Signals, das von einem auf einer Membran (122) des Sensorkopfs (12) angeordneten Dehnungsmessstreifen (SG) gemessen wurde, zu einem externen Gerät konfiguriert ist; und
Drahtbonden der Leiterplatte (13) und des Dehnungsmessstreifens (SG) nach dem Zusammenfügen,
wobei die Leiterplatte (13) ein Sensorloch aufweist, das mit einem Durchmesser ausgebildet ist, der größer ist als ein Durchmesser der Membran (122).

12. Verfahren nach Anspruch 11, das ferner Folgendes beinhaltet:
Zusammenfügen eines Verbinders (14) mit dem Sensorgehäuse (11) nach dem Drahtbonden, wobei der Verbinder (14) eine Verbindungsklemme (142) zum elektrischen Verbinden mit der Leiterplatte (13) aufweist; und
Installieren einer Verbindungsklemme (15) auf der Leiterplatte (13) vor dem Zusammenfügen der Leiterplatte (13) mit dem Sensorgehäuse (11), wobei die Verbindungsklemme (15) zum elektrischen Verbinden der Verbindungsklemme (142) und der Leiterplatte (13) konfiguriert ist,
wobei die Verbindungsklemme (15) eine Elastizität in einer Richtung lotrecht zur Leiterplatte (13) aufweist.

## Revendications

1. Capteur de pression (1), comprenant :
un logement de capteur (11) incluant un dispositif d'attache (111) destiné à être attaché à une cible de mesure de pression, et un passage de logement (112) configuré pour pénétrer dans le dispositif d'attache (111) et guider un fluide s'écoulant de la cible de mesure de pression ; et
une tête de capteur (12) incluant un port (121) enfoncé dans et fixé sur le passage de logement (112), un passage de tête (125) configuré pour pénétrer dans le port (121) et guider le fluide s'écoulant du passage de logement (112), et un diaphragme (122) positionné au niveau d'une portion d'extrémité du passage de tête (125),
dans lequel la tête de capteur (12) inclut en outre une bride (123) positionnée entre le port (121) et le diaphragme (122), la bride (123) ayant un diamètre (d4) qui est plus grand qu'un diamètre du port (121) et un diamètre du diaphragme (122), et
dans lequel le logement de capteur (11) inclut en outre un évidement de réception (113) recevant la bride (123) et ayant : (i) un diamètre (d7) qui est plus grand que le diamètre (d6) du passage de logement (112) ; (ii) une surface de fond (113a), dont le bord interne est raccordé au passage de logement (112) ; et (iii) une surface circonférentielle interne (113b) raccordée à et englobant une circonférence de la surface de fond (113a),
**caractérisé en ce que** la bride (123) est disposée en écartement par rapport à la surface de fond (113a) de l'évidement de réception (113).

2. Capteur de pression (1) de la revendication 1, dans lequel le port (121) est formé en un matériau ayant une limite d'élasticité plus élevée qu'un matériau du logement de capteur (11).

3. Capteur de pression (1) de la revendication 2, dans lequel le port (121) inclut :
une pièce rapportée (1211) destinée à être insérée dans le passage de logement (112) ;
une partie à enfoncer (1222) positionnée derrière la pièce rapportée (1211) sur la base d'un sens dans lequel le port (121) est inséré dans le passage de logement (112), la partie à enfoncer (1222) ayant un diamètre (d2) qui est plus grand que le diamètre (d6) du passage de logement (112) ; et
une rainure de fixation (1223) encastrée entre la pièce rapportée (1211) et la partie à enfoncer (1222), la rainure de fixation (1223) ayant un diamètre minimum qui est plus petit que le diamètre du passage de logement (112), la rainure de fixation (1223) étant configurée pour empêcher une séparation du port (121) et du passage de logement (112) grâce à la réception d'un flux de métal formé au niveau d'une portion d'extrémité interne du passage de logement (112) pendant que la partie à enfoncer (1222) est en train d'être pressée dans le passage de logement (112).

4. Capteur de pression (1) de la revendication 1, dans lequel une aire en coupe transversale de la bride (123) est plus grande qu'une aire en coupe transversale maximum du port (121) sur la base d'un plan perpendiculaire à un sens longitudinal du passage de logement (112).

5. Capteur de pression (1) de la revendication 1, dans lequel la tête de capteur (12) inclut en outre un col de raccordement (124) disposé entre la bride (123) et le diaphragme (122), le col de raccordement ayant un diamètre qui est inférieur à un diamètre maximum (d3) du diaphragme (122) et un diamètre maximum (d2) du port (121).

6. Capteur de pression (1) de la revendication 1, comprenant en outre :
une carte de circuits (13) incluant un trou de capteur formé de façon à avoir un diamètre plus grand qu'un diamètre (d3) du diaphragme (122),
dans lequel le diaphragme (122) est positionné au niveau d'un centre du trou de capteur, et
une jauge extensométrique (« strain gauge » SG) assujettie au diaphragme (122) et la carte de circuits (13) sont connectées électriquement l'une à l'autre par un câblage filaire.

7. Capteur de pression (1) de la revendication 6, comprenant en outre :
un connecteur (14) configuré pour transmettre un signal reçu à partir de la carte de circuits (13) à un dispositif externe,
dans lequel le connecteur (14) inclut :
un logement de connecteur (141) destiné à être connecté au logement de capteur (11) ; et
une borne de connexion (142) destinée à être positionnée dans le logement de connecteur (141) et connectée électriquement à la carte de circuits (13).

8. Capteur de pression (1) de la revendication 7, comprenant en outre :
une borne de connexion (15) ayant une élasticité dans un sens qui est perpendiculaire à la carte de circuits (13), la borne de connexion (15) étant configurée pour connecter la carte de circuits (13) et la borne de connexion (142).

9. Procédé de fabrication d'un capteur de pression (1) selon la revendication 1, le procédé comprenant :
l'alignement du port (121) de la tête de capteur (12) avec le passage de logement (112) du logement de capteur (11), la tête de capteur (11) incluant en outre la bride (123) positionnée entre le port (121) et le diaphragme (122) de la tête de capteur (12), la bride ayant le diamètre (d4) qui est plus grand que le diamètre du port (121) et le diamètre du diaphragme (122), le logement de capteur (11) incluant en outre l'évidement de réception (113) ayant le diamètre (d7) qui est plus grand que le diamètre (d6) du passage de logement (12), l'évidement de réception (113) étant configuré pour recevoir la bride (123) ; et
la mise sous pression du port (121) dans le passage de logement (112) par la pressurisation de la bride (123) de la tête de capteur (12),
dans lequel le port (121) a le diamètre (d2) qui est plus grand que le passage de logement (112), et la bride (123) a le diamètre (d4) qui est plus grand que le diamètre (d2) du port (121),
**caractérisé en ce que**, lorsque la tête de capteur (12) est complètement attachée au logement de capteur (11) la bride (123) est disposée en écartement par rapport à une surface de fond (113a) de l'évidement de récepteur (113).

10. Procédé de la revendication 9, dans lequel la mise sous pression est réalisée grâce à l'utilisation d'un montage exclusif configuré pour pressuriser la bride (123) sans pressuriser un diaphragme (122) de la tête de capteur (12) .

11. Procédé de la revendication 9, comprenant en outre :
l'assemblage d'une carte de circuits (13) avec le logement de capteur (11) après la mise sous pression, la carte de circuits (13) étant configurée pour transmettre, à un dispositif externe, un signal mesuré à partir d'une jauge extensométrique (SG) disposée sur un diaphragme (122) de la tête de capteur (12) ; et
le câblage filaire de la carte de circuits (13) et de la jauge extensométrique (SG) après l'assemblage,
dans lequel la carte de circuits (13) inclut un trou de capteur formé de façon à avoir un diamètre plus grand qu'un diamètre du diaphragme (122).

12. Procédé de la revendication 11, comprenant en outre :
l'assemblage d'un connecteur (14) avec le logement de capteur (11) après le câblage filaire, le connecteur (14) incluant une borne de connexion (142) pour être connectée électriquement à la carte de circuits (13) ; et
l'installation d'une borne de connexion (15) sur la carte de circuits (13) avant l'assemblage de la carte de circuits (13) avec le logement de capteur (11), la borne de connexion (15) étant configurée pour connecter électriquement la borne de connexion (142) et la carte de circuits (13),
dans lequel la borne de connexion (15) a une élasticité dans un sens qui est perpendiculaire à la carte de circuits (13).
